# EUROPEAN PATENT APPLICATION

(11) **EP 4 601 052 A1**
(43) Date of publication of application: **13.08.2025**
(21) Application number: 25155931.6
(22) Date of filing: 05.02.2025
(51) Int. Cl.: H01M 4/66, H01M 4/02

(54) **POSITIVE ELECTRODE PLATE, SECONDARY BATTERY, AND ELECTRONIC DEVICE**

(30) Priority: 07.02.2024 CN 202410175516
(71) Applicant: Ningde Amperex Technology Ltd., Ningde City, Fujian 352100 (CN)
(72) Inventor: WANG, Taosheng, Ningde City, Fujian Province, People s Republic of China, 352100 (CN); QU, Changming, Ningde City, Fujian Province, People s Republic of China, 352100 (CN); HUANG, Jiajun, Ningde City, Fujian Province, People s Republic of China, 352100 (CN)
(74) Representative: Icosa

(57) **Abstract**

A positive electrode plate includes a current collector, and a positive electrode protection layer and a positive active material layer disposed on the current collector in sequence. The positive electrode protection layer includes inorganic particles, a first conductive material, and a binder. The binder includes a water-soluble polymer metal salt. The first conductive material includes a conductive oxide containing a doping element. A first metal element in the conductive oxide includes at least one of a Group IVA metal element and a Group IIIA metal element. The doping element includes at least one of a Group IIIA non-metal element, a Group VA element, or a Group VIIA element. A mass ratio of the doping element to the first metal element is 1: (10 to 200), and a mass ratio of the first metal element to a metal element in the inorganic particles is 1: (3 to 9). The positive electrode plate with the positive electrode protection layer is of high safety and can effectively improve electrochemical performance of the battery during use.

## Description

### TECHNICAL FIELD

This application relates to the field of manufacturing a positive electrode plate, and in particular, to a positive electrode plate, a secondary battery, and an electronic device.

### BACKGROUND

With the extensive popularization of lithium-ion batteries, the service life of the lithium-ion batteries is highly valued by users increasingly. In addition, users, after-sales service staff, battery vendors, and lithium battery manufacturers have put forward new requirements for the safety performance of batteries. Currently, the cycle life is mainly improved by alleviating capacity loss and power loss:
(1) Capacity loss can be alleviated by improving a positive electrode material, an electrolyte solution, and the like. Specific methods include: selecting a positive electrode material that exhibits higher performance of doping and coating and better high-temperature stability; using a positive electrode protective agent; improving SEI and CEI film formation through additives; and reducing side reactions at high temperature.
(2) Power loss can be alleviated by optimizing the constituents of the positive electrode, optimizing the pressure-induced electrochemical formation fixture (PIEF) process, improving the interface, and the like. Specific methods include: increasing the amount of a conductive agent to improve the conductivity of the positive electrode; reducing the amount of carbon nanotubes to improve the high-temperature stability; improving the negative electrode film formation through the PIEF process, using a high pressure/low current process to make the negative electrode SEI film denser; and suppressing battery deformation at high temperature by using an oil-based separator (OBS). However, such technical solutions fail to achieve desirable safety performance while improving the cycle life to some extent.

### SUMMARY

This application aims to provide a positive electrode plate, a secondary battery, and an electronic device to solve the problems of existing positive electrode plates. A first aspect of this application provides a positive electrode plate. The positive electrode plate includes a current collector as well as a positive electrode protection layer and positive active material layer disposed on the current collector in sequence. The positive electrode protection layer includes inorganic particles, a first conductive material, and a binder. The binder includes a water-soluble polymer metal salt. The first conductive material includes a conductive oxide containing a doping element. A first metal element in the conductive oxide includes at least one of a Group IVA metal element and a Group IIIA metal element. The doping element includes at least one of a Group IIIA non-metal element, a Group VA element, or a Group VIIA element. In the conductive oxide containing a doping element, a mass ratio of the doping element to the first metal element is 1: (10 to 200), and a mass ratio of the first metal element to a metal element in the inorganic particles is 1: (3 to 9).

A second aspect of this application provides a secondary battery. The secondary battery includes the positive electrode plate.

A third aspect of this application further provides an electronic device. The electronic device includes the secondary battery.

Beneficial effects:
The positive electrode protection layer uses a water-soluble polymer metal salt as a binder. The water-soluble polymer metal salt possesses a large specific surface area, and can be highly dispersed after contacting water. In addition, the physical tensile strength of the water-soluble polymer metal salt is high, and a large number of polar functional groups exist on the surface of the water-soluble polymer metal salt, thereby increasing the interaction force between the positive electrode protection layer and the positive electrode current collector, and increasing the interfacial adhesion. The inorganic particles added in the positive electrode protection layer can form a safety protection coating of high adhesiveness and a high resistance, thereby reducing dangerous short-circuit points on the positive electrode, increasing the short-circuit resistance, reducing the heat power generated by a short circuit, and improving safety performance. By doping a specified conductive oxide with a specified type of doping element at a specified mass percentage, the positive electrode protection layer is made highly conductive.

In the positive electrode plate provided herein, the positive electrode protection layer of high adhesiveness and uniform conductivity can alleviate deformation of the positive current collector, and reduce the contact between the positive active material layer and the positive current collector. In addition, the water-soluble polymer metal salt is relatively hydrophilic, and is more soluble than non-water-soluble polymers, thereby boosting the transmission of electrons and ions, thereby enhancing the kinetics of the battery, and improving the electrical performance of the battery, especially high-temperature cycle performance.

### DETAILED DESCRIPTION

For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application). It is hereby noted that to the extent that no conflict occurs, embodiments of this application and the features in the embodiments may be combined with each other.

This application provides a positive electrode plate. The positive electrode plate includes a positive current collector as well as a positive electrode protection layer and positive active material layer disposed on the positive current collector in sequence. The positive electrode protection layer includes inorganic particles, a first conductive material, and a binder. The binder includes a water-soluble polymer metal salt. The first conductive material includes a conductive oxide containing a doping element. A first metal element in the conductive oxide includes at least one of a Group IVA metal element and a Group IIIA metal element. The doping element includes at least one of a Group IIIA non-metal element, a Group VA element, or a Group VIIA element. In the conductive oxide containing a doping element, a mass ratio of the doping element to the first metal element is 1: (10 to 200), and a mass ratio of the first metal element to a metal element in the inorganic particles is 1: (3 to 9).

The positive electrode protection layer uses a water-soluble polymer metal salt as a binder. The water-soluble polymer metal salt possesses a large specific surface area, and can be highly dispersed after contacting water. In addition, the physical tensile strength of the water-soluble polymer metal salt is high, and a large number of polar functional groups exist on the surface of the water-soluble polymer metal salt, thereby increasing the interaction force between the positive electrode protection layer and the positive electrode current collector, and increasing the interfacial adhesion. The inorganic particles added in the positive electrode protection layer can form a safety protection coating of high adhesiveness and a high resistance, thereby reducing dangerous short-circuit points on the positive electrode, increasing the short-circuit resistance, reducing the heat power generated by a short circuit, and improving safety performance.

By doping a specified conductive oxide with a specified type of doping element at a specified mass percentage, the positive electrode protection layer is made highly conductive.

In the positive electrode plate provided herein, the positive electrode protection layer of high adhesiveness and uniform conductivity can alleviate deformation of the positive current collector, and reduce the contact between the positive active material layer and the positive current collector. In addition, the water-soluble polymer metal salt is relatively hydrophilic, and is more soluble than non-water-soluble polymers, thereby boosting the transmission of electrons and ions, thereby enhancing the kinetics of the battery, and improving the electrical performance of the battery, especially high-temperature cycle performance.

On this basis, the positive electrode plate with the positive electrode protection layer is of high safety and can effectively improve electrochemical performance of the battery during use.

In some embodiments of this application, based on a total mass of the positive electrode protection layer, a mass percentage of the water-soluble polymer metal salt is 0.5% to 15%. As an example, based on the total mass of the positive electrode protection layer, the mass percentage of the water-soluble polymer metal salt is 0.5%, 1.0%, 1.5%, 2.0%, 2.5%, 3.0%, 3.5%, 4.0%, 4.5%, 5.0%, 5.5%, 6.0%, 6.5%, 7.0%, 7.5%, 8.0%, 8.5%, 9.0%, 9.5%, 10.0%, 10.5%, 11.0%, 11.5%, 12.0%, 12.5%, 13.0%, 13.5%, 14.0%, 14.5%, 15%, or a value falling within a range formed by any two thereof. When the mass percentage of the water-soluble polymer metal salt is excessively low, the adhesion between the positive electrode protection layer and the positive current collector is insufficient. When the mass percentage of the water-soluble polymer metal salt is excessively high, the conductivity of the positive electrode protection layer is insufficient. In some preferred embodiments of this application, based on a total mass of the positive electrode protection layer, a mass percentage of the water-soluble polymer metal salt is 3% to 15%. In contrast to other ranges of the mass percentage, controlling the mass percentage of the water-soluble polymer metal salt to fall within the above range further increases the interaction force between the positive electrode protection layer and the positive current collector, thereby increasing the interfacial adhesion.

In some embodiments of this application, a second metal element that forms the water-soluble polymer metal salt includes at least one of a Group IA metal element or a Group IIA metal element. In contrast to other metal elements, the Group IA metal element and the Group IIA metal element are of relatively high metal activity, so that the water-soluble polymer metal salt formed from such metal elements is more water-soluble.

In some embodiments of this application, a water-soluble polymer that forms the water-soluble polymer metal salt includes at least one of polyacrylic acid, carboxymethyl cellulose, polyacrylonitrile, or styrene butadiene. In contrast to other water-soluble polymers, the above types of polymers are more water-soluble, and contain a polar functional group with a stronger interaction force between the polar functional group and the positive current collector, thereby further increasing the adhesion between the positive electrode protection layer and the positive current collector, and in turn, further improving safety. Preferably, the water-soluble polymer metal salt includes at least one of a water-soluble polymer sodium salt or a water-soluble polymer lithium salt.

In some embodiments of this application, in the conductive oxide containing the doping element, a mass ratio of the doping element to the first metal element is 1: (20 to 150). As an example, in the conductive oxide containing a doping element, the mass ratio of the doping element to the first metal element is 1: 20, 1: 30, 1: 40, 1: 50, 1: 60, 1: 70, 1: 80, 1: 90, 1: 100, 1: 110, 1: 120, 1: 130, 1: 140, 1: 150, or a value falling within a range formed by any two thereof. If the mass ratio of the doping element to the first metal element is excessively low, the increase in conductivity is not obvious. When the mass ratio of the doping element to the first metal element is high, the low proportion of the conductive oxide is also detrimental to increasing the conductivity of the positive electrode protection layer. In contrast to other ranges, controlling the mass ratio of the doping element to the first metal element to fall within the above range can achieve higher conductivity.

In some embodiments of this application, in the conductive oxide containing a doping element, a mass ratio of the first metal element to a metal element in the inorganic particles is 1: (5 to 9). As an example, in the conductive oxide containing a doping element, the mass ratio of the first metal element to the metal element in the inorganic particles is 1: 5, 1: 5.5, 1: 6, 1: 6.5, 1: 7, 1: 7.5, 1: 8, 1: 8.5, 1: 9, or a value falling within a range formed by any two thereof. The metal element in the inorganic particles also exists in the form of oxides. Controlling the mass ratio of the first metal element in the conductive oxide containing a doping element to the metal element in the inorganic particles can regulate the ratio of the conductive oxide containing a doping element to the inorganic particles. The inorganic particles are of relatively high mechanical strength, stability, and heat resistance. Therefore, controlling the mass ratio of the first metal element to the metal element in the inorganic particles to fall within the above range can further improve the ability of the battery to resist external puncture, squeezing, and other external forces, thereby reducing the risk of short circuiting of the battery while achieving desirable high-temperature cycle performance of the battery.

In some embodiments of this application, the first metal element includes at least one of Sn or In, and the doping element includes at least one of Sb, F, or B.

In some embodiments of this application, the inorganic particles include at least one of ceramic, boehmite, aluminum oxide, titanium dioxide, magnesium oxide, zirconium oxide, or zinc oxide. Boehmite is also called diaspore, with a molecular formula γ-AlOOH (hydrated aluminum oxide).

To further improve the electrochemical performance of the battery, in some embodiments of this application, the conductive composite includes Sb-doped SnO₂-coated titanium dioxide, a mass ratio of Sb to Sn in SnO₂ is 1: (100 to 200), and a mass ratio of Sn to Ti is 1: (3 to 9). In some embodiments of this application, the conductive composite includes F-doped InO₂-coated aluminum oxide, a mass ratio of the F element to the In element in the InO₂ is 1: (100 to 200), and a mass ratio of In to Al is 1: (3 to 9).

In some embodiments of this application, the first conductive material coats a surface of the inorganic particles to form a conductive composite. Coating the surface of the inorganic particles with the first conductive material can improve the conductivity of the positive electrode protection layer. In addition, the excellent dispersivity of the inorganic particles imparts high dispersivity to the first conductive material that is conductive, so that the battery exhibits superior high-temperature cycle performance in addition to excellent safety performance.

In practical applications, the particle diameter of the conductive composite and the particle diameter of the inorganic particles also affect the performance of the positive electrode protection layer to some extent. In some embodiments of this application, a particle diameter of the conductive composite is 100 nm to 300 nm, and a particle diameter of the inorganic particles is 50 nm to 200 nm. As an example, the particle diameter of the conductive composite is 100 nm, 120 nm, 140 nm, 160 nm, 180 nm, 200 nm, 220 nm, 240 nm, 260 nm, 280 nm, 300 nm, or a value falling within a range formed by any two thereof. As an example, the particle diameter of the inorganic particles is 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, or a value falling within a range formed by any two thereof. The particle diameter of the conductive composite and the particle diameter of the inorganic particles need to be properly matched to lead to an appropriate proportion of the first conductive material and a relatively high conductivity of the conductive composite, thereby improving the safety performance of the positive electrode protection layer while achieving high mechanical strength. In contrast to other ranges, the above ranges can lead to appropriate proportions of the first conductive material and the inorganic particles in the conductive composite, thereby endowing the positive electrode protection layer with relatively high conductivity and safety.

In some embodiments of this application, a particle diameter of the conductive oxide containing the doping element is 5 nm to 50 nm. As an example, the particle diameter of the conductive oxide containing the doping element is 5 nm, 10 nm, 15 nm, 20 nm, 25 nm, 30 nm, 35 nm, 40 nm, 45 nm, 50 nm, or a value falling within a range formed by any two thereof.

In some embodiments of this application, based on a total mass of the positive electrode protection layer, a mass percentage of the conductive composite (containing the first conductive material and the inorganic particles) is 80% to 95%. In contrast to other ranges, controlling the mass percentage of the conductive composite (or the first conductive material and the inorganic particles) fall within the above range is conducive to ensuring safety, increasing the bonding force between the positive electrode protection layer and the positive current collector, improving the coating performance, and in turn, further improving the battery performance.

In some embodiments of this application, based on a total mass of the conductive composite, a mass percentage of the conductive oxide containing the doping element is 10% to 25%. As an example, based on the total mass of the conductive composite, the mass percentage of the conductive oxide containing a doping element is 10%, 12%, 14%, 16%, 18%, 20%, 22%, 25%, or a value falling within a range formed by any two thereof.

To further increase the conductivity of the positive electrode protection layer, in some embodiments of this application, the positive electrode protection layer further includes a second conductive material. The second conductive material includes at least one of conductive carbon black, carbon nanotubes, Ketjen black, conductive graphite, or vapor grown carbon fibers.

In some embodiments of this application, when the positive electrode protection layer further includes a second conductive material, based on a total mass of the positive electrode protection layer, a mass percentage of the second conductive material is greater than 0 and less than or equal to10%. As an example, based on the total mass of the positive electrode protection layer, the mass percentage of the second conductive material is 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a value falling within a range formed by any two thereof. Controlling the mass percentage of the second conductive material to fall within the above range is conducive to ensuring safety of the battery while improving the conductivity of the battery.

In some embodiments of this application, a thickness of the positive electrode protection layer is 0.5 µm to 5 µm. As an example, the thickness of the positive electrode protection layer is 0.5 µm, 1 µm, 1.5 µm, 2 µm, 2.5 µm, 3 µm, 3.5 µm, 4 µm, 4.5 µm, 5 µm, or a value falling within a range formed by any two thereof. Preferably, the thickness of the positive electrode protection layer is 1 µm to 5 µm.

In some embodiments of this application, a resistance of the positive electrode protection layer is 0.1 S2 to 5 Q. As an example, the resistance of the positive electrode protection layer is 0.1 S2, 0.5 S2, 1 S2, 1.5 S2, 2.0 S2, 2.5 S2, 3 S2, 3.5 S2, 4 S2, 4.5 S2, 5 S2, or a value falling within a range formed by any two thereof.

In some embodiments of this application, a sheet resistance of the positive electrode plate is 0.5 S2 to 10 S2, and adhesion of the positive electrode protection layer to the positive current collector is greater than 200 N/m.

In some embodiments, the positive active material layer includes a positive active material, a binder, and a conductive agent. In some embodiments, the positive active material may include at least one of lithium cobalt oxide, lithium nickel cobalt manganese oxide, lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, or lithium titanium oxide. In some embodiments, the binder may include various binder polymers, such as at least one of polyvinylidene fluoride, polytetrafluoroethylene, polyolefins, sodium carboxymethylcellulose, lithium carboxymethylcellulose, modified polyvinylidene fluoride, modified SBR rubber, or polyurethane. In some embodiments, the conductive agent may be made of any conductive material so long as the material does not cause a chemical change. Examples of the conductive agent include: a carbon-based material (for example, natural graphite, artificial graphite, carbon black, acetylene black, Ketjen black, and carbon fiber), a metal-based material (for example, metal powder or metal fiber containing copper, nickel, aluminum, silver, and the like), a conductive polymer (for example, a polyphenylene derivative), and any mixture thereof.

In some embodiments, the positive current collector may be a metal foil. As an example, the positive current collector may be an aluminum foil.

A second aspect of this application provides a secondary battery. The secondary battery includes the positive electrode plate.

The secondary battery exhibits all the advantages of the positive electrode plate, the details of which are omitted here.

The secondary battery according to this application includes a negative electrode plate in addition to the positive electrode plate. The negative electrode plate includes a negative current collector and a negative active material layer disposed on the current collector.

In an embodiment of this application, the specific type of the negative active material is not limited, and may be selected as required. Specifically, the negative active material is one or more selected from natural graphite, artificial graphite, mesocarbon microbeads (MCMB for short), hard carbon, soft carbon, silicon, a silicon-carbon composite, a Li-Sn alloy, a Li-Sn-O alloy, Sn, SnO, SnO₂, spinel-structured lithiated TiO₂-Li₄Ti₅O₁₂, or a Li-Al alloy. Non-restrictive examples of the carbonaceous material include crystalline carbon, non-crystalline carbon, and a mixture thereof. The crystalline carbon may be amorphous or flake-shaped, mini-flake-shaped, spherical or fibrous natural graphite or artificial graphite. The non-crystalline carbon may be soft carbon, hard carbon, mesophase pitch carbide, calcined coke, and the like.

In some embodiments, the negative active material layer may include a binder. The binder strengthens bonding between particles of the negative active material and bonding between the negative active material and the current collector.

In some embodiments, examples of the negative electrode binder include, but are not limited to, polyvinyl alcohol, carboxymethyl cellulose, hydroxypropyl cellulose, diacetyl cellulose, polyvinyl chloride, carboxylated polyvinyl chloride, a polymer containing ethylene oxide, polyvinylpyrrolidone, polyurethane, polytetrafluoroethylene, poly(1,1-difluoroethylene), polyethylene, polypropylene, styrene butadiene rubber, acrylic (acrylated) styrene-butadiene rubber, epoxy resin, nylon, and the like.

In some embodiments, the negative active material layer includes a conductive material, thereby imparting conductivity to the electrode. The conductive material may include any conductive material that does not cause a chemical change. Examples of the conductive material include, but are not limited to, a carbon-based material (for example, natural graphite, artificial graphite, carbon black, acetylene black, Ketjen black, and carbon fiber), a metal-based material (for example, metal powder, metal fiber, including copper, nickel, aluminum, silver, and the like), a conductive polymer (for example, a polyphenylene derivative), and any mixture thereof.

In some embodiments, the negative current collector may be selected from a copper foil, a nickel foil, a stainless steel foil, a titanium foil, foamed nickel, foamed copper, a conductive-metal-clad polymer substrate, and any combination thereof.

The secondary battery according to this application further includes a separator. The material and the shape of the separator used in the secondary battery according to this application are not particularly limited, and may be based on any technology disclosed in the prior art. In some embodiments, the separator includes a polymer or an inorganic compound or the like formed from a material that is stable to the electrolyte solution disclosed in this application.

For example, the separator may include a substrate layer and a surface treatment layer. The substrate layer is a non-woven fabric, film or composite film, which, in each case, is of a porous structure. The material of the substrate layer is at least one selected from polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the substrate layer. The surface treatment layer may be a polymer layer or an inorganic compound layer, or a layer formed by mixing a polymer and an inorganic compound. The inorganic compound layer includes inorganic particles and a binder. The inorganic particles are at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is at least one selected from polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alkoxide, poly methyl methacrylate, polytetrafluoroethylene, or polyhexafluoropropylene. The polymer layer includes a polymer. The material of the polymer is at least one selected from polyamide, polyacrylonitrile, acrylate polymer, polyacrylic acid, polyacrylic acid sodium salt, polyvinylpyrrolidone, polyvinyl alkoxide, polyvinylidene difluoride, or poly(vinylidene fluoride-co-hexafluoropropylene).

The secondary battery according to this application further includes an electrolyte solution. The electrolyte solution applicable to this application may be an electrolyte solution known in the prior art.

According to some embodiments of this application, the electrolyte solution includes an organic solvent, a lithium salt, and optionally an additive. The organic solvent in the electrolyte solution of this application may be any organic solvent known in the prior art suitable for use as a solvent of the electrolyte solution. An electrolyte used in the electrolyte solution according to this application is not limited, and may be any electrolyte known in the prior art. The additive in the electrolyte solution according to this application may be any additive known in the prior art suitable for use as an additive in the electrolyte solution. In some embodiments, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, such as at least one of 1,3-dioxane (DOL) or ethylene glycol dimethyl ether (DME). In some embodiments, the lithium salt includes at least one of an organic lithium salt or an inorganic lithium salt. In some embodiments, the lithium salt includes, but is not limited to: lithium hexafluorophosphate (LiPF₆), lithium tetrafluoroborate (LiBF₄), lithium difluorophosphate (LiPO₂F₂), lithium bistrifluoromethanesulfonimide LiN(CF₃SO₂)₂ (LiTFSI), lithium bis(fluorosulfonyl)imide Li(N(SO₂F)₂) (LiFSI), lithium bis(oxalate) borate LiB(C₂O₄)₂

(LiBOB), or lithium difluoro(oxalate)borate LiBF₂(C₂O₄) (LiDFOB). In some embodiments, the additive includes at least one of fluoroethylene carbonate or adiponitrile.

In some embodiments, the secondary battery is a jelly-roll secondary battery or a stacked-type secondary battery.

According to some embodiments of this application, the secondary battery according to this application includes, but is not limited to: a lithium-ion battery or a sodium-ion battery.

A third aspect of this application provides an electronic device. The electronic device includes the secondary battery.

The electronic device also exhibits all the advantages of the positive electrode plate or the secondary battery, the details of which are omitted here.

The electronic device or apparatus according to this application is not particularly limited. In some embodiments, the electronic devices of this application include, but are not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The following describes this application in further detail with reference to specific embodiments. The embodiments are not intended to limit the protection scope of this application.

### Embodiment 1

Using an aluminum foil as a positive current collector, and applying a positive electrode protection layer slurry evenly onto a surface of the aluminum foil to form a 2 µm-thick positive electrode protection layer, where the constituents of the positive electrode protection layer slurry are 80 wt% conductive composite (Sb-doped SnO₂-coated titanium dioxide), 10 wt% highly conductive material (conductive carbon, Cabot VXC-72R), and 10 wt% binder (lithium polyacrylate, Sigma-Aldrich JH-09), so as to make a functional primer coating (DHC). Using a lithium cobalt oxide slurry as an active layer slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate.

Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

### Embodiment 2

Using an aluminum foil as a positive current collector, and applying a positive electrode protection layer slurry evenly onto a surface of the aluminum foil to form a 2 µm-thick positive electrode protection layer, where the constituents of the positive electrode protection layer slurry are 95 wt% conductive composite (Sb-doped SnO₂-coated titanium dioxide), and 5 wt% binder (lithium polyacrylate, Sigma-Aldrich JH-09), so as to make a functional primer coating (DHC). Using a lithium cobalt oxide slurry as an active layer slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate.

Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

### Embodiment 3

Using an aluminum foil as a positive current collector, and applying a positive electrode protection layer slurry evenly onto a surface of the aluminum foil to form a 2 µm-thick positive electrode protection layer, where the constituents of the positive electrode protection layer slurry are 85 wt% conductive composite (Sb-doped SnO₂-coated titanium dioxide), and 15 wt% binder (lithium polyacrylate, Sigma-Aldrich JH-09), so as to make a functional primer coating (DHC). Using a lithium cobalt oxide slurry as a positive electrode slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate.

Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

### Embodiment 4

Using an aluminum foil as a positive current collector, and applying a positive electrode protection layer slurry evenly onto a surface of the aluminum foil to form a 2 µm-thick positive electrode protection layer, where the constituents of the positive electrode protection layer slurry are 90 wt% conductive composite (Sb-doped SnO₂-coated titanium dioxide), 9.5 wt% highly conductive material (conductive carbon, Cabot VXC-72R), and 0.5 wt% binder (lithium polyacrylate, Sigma-Aldrich JH-09), so as to make a functional primer coating (DHC). Using a lithium cobalt oxide slurry as a positive electrode slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate.

Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

### Embodiment 5

Using an aluminum foil as a positive current collector, and applying a positive electrode protection layer slurry evenly onto a surface of the aluminum foil to form a 2 µm-thick positive electrode protection layer, where the constituents of the positive electrode protection layer slurry are 80 wt% conductive composite (Sb-doped SnO₂-coated titanium dioxide), 10 wt% highly conductive material (conductive carbon, Cabot VXC-72R), and 10 wt% binder (sodium polyacrylate, Sigma-Aldrich), so as to make a functional primer coating. Using a lithium cobalt oxide slurry as a positive electrode slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate.

Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

### Embodiment 6

Using an aluminum foil as a positive current collector, and applying a positive electrode protection layer slurry evenly onto a surface of the aluminum foil to form a 2 µm-thick positive electrode protection layer, where the constituents of the positive electrode protection layer slurry are 95 wt% conductive composite (Sb-doped SnO₂-coated titanium dioxide), and 5 wt% binder (sodium polyacrylate, Sigma-Aldrich), so as to make a functional primer coating (DHC). Using a lithium cobalt oxide slurry as a positive electrode slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate.

Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

### Embodiment 7

Using an aluminum foil as a positive current collector, and applying a positive electrode protection layer slurry evenly onto a surface of the aluminum foil to form a 2 µm-thick positive electrode protection layer, where the constituents of the positive electrode protection layer slurry are 85 wt% conductive composite (Sb-doped SnO₂-coated titanium dioxide), and 15 wt% binder (sodium polyacrylate, Sigma-Aldrich), so as to make a functional primer coating (DHC). Using a lithium cobalt oxide slurry as a positive electrode slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate.

Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

### Embodiment 8

Using an aluminum foil as a positive current collector, and applying a positive electrode protection layer slurry evenly onto a surface of the aluminum foil to form a 2 µm-thick positive electrode protection layer, where the constituents of the positive electrode protection layer slurry are 90 wt% conductive composite (Sb-doped SnO₂-coated titanium dioxide), 9.5 wt% highly conductive material (conductive carbon, Cabot VXC-72R), and 0.5 wt% binder (sodium polyacrylate, Sigma-Aldrich), so as to make a functional primer coating (DHC). Using a lithium cobalt oxide slurry as a positive electrode slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate.

Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

### Embodiment 9

The difference from Embodiment 3 is: the conductive composite is F-doped In₂O₃-coated Al₂O₃.

### Embodiment 10

The difference from Embodiment 3 is: the particle diameter of the conductive composite is 100 nm, and the particle diameter of the inorganic particles is 50 nm.

### Embodiment 11

The difference from Embodiment 3 is: the particle diameter of the conductive composite is 300 nm, the particle diameter of the first conductivematerial is 50 nm, and the particle diameter of the inorganic particles is 200 nm.

### Embodiment 12

The difference from Embodiment 3 is: the particle diameter of the conductive composite is 200 nm, and the particle diameter of the inorganic particles is 50 nm.

### Embodiment 13

The difference from Embodiment 3 is: the particle diameter of the conductive composite is 300 nm, and the particle diameter of the inorganic particles is 50 nm.

### Embodiment 14

The difference from Embodiment 3 is: the particle diameter of the conductive composite is 200 nm, the particle diameter of the first conductive material is 30 nm, and the particle diameter of the inorganic particles is 100 nm.

### Embodiments 15 to 21

The effect of the mass ratio of Sb to Sn in the conductive composite on the performance of the battery is investigated. Specifically, the difference from Embodiment 4 is that the mass ratio of Sb to Sn in the conductive composite used in Embodiments 15 to 21 is 1: 150, 1: 130, 1: 100, 1: 70, 1: 40, 1: 20, and 1: 10, respectively.

### Embodiments 22 to 24

The effect of the mass ratio of Sn to Ti in the conductive composite on the performance of the battery is investigated. Specifically, the difference from Embodiment 3 is that the mass ratio of Sn to Ti in the conductive composite in these embodiments is 1: 5, 1: 7, and 1: 9, respectively.

### Embodiment 25

The difference from Embodiment 3 is: based on the total mass of the positive electrode protection layer, the mass percentage of the binder is 20%.

The method for preparing the battery and the method for testing the performance of the battery in Embodiments 2 to 25 are similar to those in Embodiment 1, and the main differences lie in: the binder used; the mass ratio between the conductive composite, the conductive agent, and the binder in the primer coating; and the types and mass percentage of the materials used. The composition and the test results are shown in Table 1.

### Comparative Embodiment 1

Using an aluminum foil as a positive current collector, and applying a positive electrode protection layer slurry evenly onto a surface of the aluminum foil to form a 2 µm-thick positive electrode protection layer, where the constituents of the functional coating layer slurry are 75 wt% conductive composite (Sb-doped SnO₂-coated titanium dioxide), 10 wt% highly conductive material (conductive carbon, Cabot VXC-72R), and 15 wt% binder (lithium polyacrylate, Sigma-Aldrich JH-09), so as to make a functional primer coating. Using a lithium cobalt oxide slurry as a positive electrode slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate. Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

Testing the nail penetration performance of the battery to determine the mechanical safety performance of the battery. Determining the high-temperature cycle performance of the battery.

### Comparative Embodiment 2

Using an aluminum foil as a positive current collector, and applying a positive electrode protection layer slurry evenly onto a surface of the aluminum foil to form a 2 µm-thick positive electrode protection layer, where the constituents of the functional coating layer slurry are 80 wt% conductive composite (Sb-doped SnO₂-coated titanium dioxide), 15 wt% highly conductive material (conductive carbon, Cabot VXC-72R), and 5 wt% binder (lithium polyacrylate, Sigma-Aldrich JH-09), so as to make a functional primer coating. Using a lithium cobalt oxide slurry as a positive electrode slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate. Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

### Comparative Embodiment 3

Using an aluminum foil as a positive current collector, and applying a positive electrode protection layer slurry evenly onto a surface of the aluminum foil to form a 2 µm-thick positive electrode protection layer, where the constituents of the functional coating slurry are 80 wt% conductive composite (Sb-doped SnO₂-coated titanium dioxide), and 20 wt% binder (lithium polyacrylate, Sigma-Aldrich JH-09), so as to make a functional primer coating. Using a lithium cobalt oxide slurry as a positive electrode slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate. Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

### Comparative Embodiment 4

Using an aluminum foil as a positive current collector, and applying a positive electrode protection layer slurry evenly onto a surface of the aluminum foil to form a 2 µm-thick positive electrode protection layer, where the constituents of the functional coating slurry are 95 wt% conductive composite (Sb-doped SnO₂-coated titanium dioxide), and 5 wt% polyvinylidene difluoride (PVDF, DS202, from Dongyue Group), so as to make a functional primer coating. Using a lithium cobalt oxide slurry as a positive electrode slurry, where the constituents of the slurry are 97.6 wt% LiCoO₂ (LCO), 1.3 wt% polyvinylidene fluoride (PVDF, DS202, from Dongyue Group), and 1.1 wt% conductive carbon black (Cabot M717). Subsequently, performing cold-pressing to make a positive electrode plate. Using a copper foil as a negative current collector, and applying a graphite slurry layer evenly onto a surface of the copper foil, where the constituents of the graphite slurry are a combination of 97.7 wt% artificial graphite (SN-P1, from Sinuo New Material Technology Co., Ltd.), 1.3 wt% carboxymethyl cellulose (CMC, BH90-II, from Changshu Wealthy Science and Technology Co., Ltd.), and 1.0 wt% styrene-butadiene rubber (SBR, from Crystal Clear Electronic Material Co., Ltd.). Subsequently, performing cold-pressing to make a negative electrode plate.

Slitting the positive electrode plate and the negative electrode plate, and then winding the electrode plates. Disposing a separator between the positive electrode plate and the negative electrode plate to serve a separation function, so as to make a jelly-roll bare cell. Performing top-and-side sealing on the bare cell, marking the product information through inkjet coding, performing vacuum-drying, injecting an electrolyte solution, leaving the bare cell to stand at high temperature, and then performing chemical formation, degassing, trimming, and other processes to obtain a finished battery.

### Comparative Embodiment 5

The difference from Embodiment 3 is: in the metal elements of the first conductive material, the mass ratio of Sb to Sn is 1: 220.

### Comparative Embodiment 6

The difference from Embodiment 3 is: no positive electrode protection layer is provided.

### Performance test

### (1) Testing the nail penetration performance of the battery

The nail penetration test method (for evaluating the nail penetration performance of the battery) is: taking 5 batteries in an embodiment, fully charging the batteries at 25±3 °C (charging the battery at a constant current of 0.5C until the voltage reaches 4.5 V, and then charging the battery at a constant voltage until the current drops to 0.05C). Penetrating the batteries with nails at normal temperature (by using a steel nail that is 4 mm in diameter and made of carbon steel, with a taper degree of 16.5 mm and a total length of 100 mm), where the nail penetration speed is set to 30 mm/s, and the nail penetration reaches such a depth that the taper of the steel nail passes through the battery.

### (2) Testing the high-temperature cycle performance of the battery

The high-temperature cycle performance test method (for evaluating the high-temperature cycle performance of the battery) is: leaving the battery to stand in a 45 °C±3 °C environment for 30 minutes, and cycling the battery according to the following steps: charging the battery at a constant current of 1.25C until the voltage reaches 4.25 V, and then charging the battery at a constant current of 1.5C until the voltage reaches 4.5 V, and then charging the battery at a constant voltage until the current diminishes to a cut-off value of 0.05C; leaving the battery to stand for 30 minutes; and then discharging the battery at a constant current of 0.7C until the voltage reaches 3.0 V, thereby completing one cycle. Repeating the above steps for 800 cycles. In the 1^{st} to 800^{th} cycles, measuring the open-circuit voltage (OCV), IMP (1 KHZ internal resistance of the battery), and THK (thickness of the battery) at the 50^{th} cycle of every 50 cycles.

### (3) Method for testing the adhesion between the coating and the current collector

Sticking one side of an electrode plate coated with a positive electrode protection layer onto a smooth steel sheet by using double-sided tape, and sticking the other side of the electrode plate by using adhesive tape. Fixing one end of the adhesive tape onto a tensile tester, and pulling the adhesive tape by using the tensile tester. Reading the adhesion force exerted when the adhesive tape is stretched. Exporting the numerical value, and dividing the value by the width of the adhesive tape to obtain the adhesion force between the current collector and the positive electrode protection layer, where the movement speed of the tensile tester is 50 mm/min, and the peeling length is 50 mm.

### (4) Method for measuring the sheet resistance of the positive electrode protection layer

Baking an electrode plate coated with a positive electrode protection layer at 80 °C for 30 minutes. Using a sheet resistance meter to measure the sheet resistance by applying a pressure of 0.4 T and holding the pressure for a time of 10 s. The value displayed by the sheet resistance meter is the sheet resistance at each different test point.

### (5) Method for testing the content of element in the primer coating

Making the primer coating of the electrode plate into an appropriate form to adapt to SEM observation. Cutting the primer coating into 5 mm × 5 mm specimens, fixing the specimen onto an SEM specimen bracket, and applying gold sputtering to enhance the conductivity of the electrode plate. Adjusting the parameters of the SEM instrument to an appropriate range. Typically, adjusting the acceleration voltage to 10 kV to 20 kV, adjusting the working distance to 2 mm to 15 mm, and adjusting the probe current to 30 mA to 50 mA to boost the signal intensity and reducing the surface charge effect, where the strongest signal is characterized based on the probe current, and the probe current is typically adjusted to 30 mA to 50 mA. Mounting the specimen onto the specimen stage in the SEM instrument, and ensuring that the specimen is stable without moving.

Using a microscope or another auxiliary function to make the specimen positioned in the observation region. Using the focal length adjustment function and the focusing function on the SEM instrument to magnify the image at a magnification of 10,000 to 100,000, so that the specimen is clearly displayed on the observation screen. Adjusting the scanning mode of the EDS to regional scanning, adjusting the electron beam acceleration voltage to 10 kV to 20 kV, and using a standard specimen of known constituents and a known concentration to establish a response curve and a standard library of the energy-dispersive X-ray spectrometer (EDS).

Selecting any 200 nm × 200 nm region on the specimen for energy spectrum analysis. Irradiating the surface of the specimen so that the EDS detects the characteristic X-ray emitted by the specimen, and recording the energy and intensity of each element. Analyzing the energy spectrum data, and identifying the presence of different elements by matching the peak position and intensity in the energy spectrum with the peaks in the standard library. Determining the peak intensity or peak area of each element and the background noise level of the corresponding signal. Performing peak rectification based on the geometric shape (inorganic compound) or thickness (organic compound) of the specimen and the characteristics of the detector in use, so as to eliminate the impact of the factors such as absorption and scattering. Calculating the mass percentage of each element based on the peak intensity or peak area of each element with reference to the pre-established response curve and the concentration of the standard specimen, and determining the type and mass percentage of each element.

### (6) Method for testing the overall particle diameter of the conductive composite

Making the primer coating of the electrode plate into an appropriate form to adapt to SEM observation. Cutting the primer coating into 5 mm × 5 mm specimens, fixing the specimen onto an SEM specimen bracket, and applying gold sputtering to enhance the conductivity of the electrode plate. Adjusting the parameters of the SEM instrument to an appropriate range. For example, adjusting the acceleration voltage to 10 kV to 20 kV, adjusting the working distance to 2 mm to 15 mm, and adjusting the probe current to 30 mA to 50 mA to boost the signal intensity and reducing the surface charge effect. Mounting the specimen onto the specimen stage in the SEM instrument, and ensuring that the specimen is stable without moving.

Using a microscope or another auxiliary function to make the specimen positioned in the observation region. Using the focal length adjustment function and the focusing function on the SEM instrument to magnify the image at a magnification of 10,000 to 100,000, so that the specimen is clearly displayed on the observation screen. Capturing images by using the SEM instrument. The SEM scans the surface of the specimen and generates images by using the interactions between the electron beam and the specimen.

Importing the obtained SEM images into the image processing software. Analyzing the particles in the SEM image by using professional image processing software or the analysis software that comes with the SEM device. A common analysis method includes: selecting a 1 µm × 1 µm region manually or automatically, and using an algorithm such as a threshold algorithm or a boundary detection algorithm to segment and extract particles. Performing statistical analysis on the particles in a plurality of selected regions, and calculating the average particle diameter (arithmetic mean of particle diameters) of the conductive composite.

The methods for preparing batteries and testing the nail penetration performance and the high-temperature cycle performance in Comparative Embodiments 2 to 6 are consistent with those in Comparative Embodiment 1, and the main differences are: the mass ratio of the first metal element to the metal element in the inorganic particles and/or the mass ratio of the doping element to the first metal in Comparative Embodiments 2 to 4 exceeds the specified range, the binder in Comparative Embodiment 4 is a non-water-insoluble polymer, the mass ratio of Sb to Sn in the metal element of the first conductive material in Comparative Embodiment 5 is not within the preferred range, and no positive electrode protection layer is provided in Comparative Embodiment 6. The composition and the test results are shown in Table 1.

**Table 1 (To be continued)**

| | Composite conductive material | Mass ratio of first metal element to metal element in inorganic particles | | Mass ratio of doping element to first metal element | | Particle diameter of first conductive material (nm) | Particle diameter of conductive composite (nm) | Particle diameter of inorganic particles (nm) |
|---|---|---|---|---|---|---|---|---|
| | | Sn: Ti | In: Al | Sb: Sn | F: In | | | |
| Embodiment 1 | Sb-doped SnO₂-coated titanium dioxide | 1:3 | / | 1: 200 | / | 5 | 250 | 200 |
| Embodiment 2 | Sb-doped SnO₂-coated titanium dioxide | 1:9 | / | 1: 200 | / | 5 | 250 | 200 |
| Embodiment 3 | Sb-doped SnO₂-coated titanium dioxide | 1:3 | / | 1: 200 | / | 5 | 250 | 200 |
| Embodiment 4 | Sb-doped SnO₂-coated titanium dioxide | 1:9 | / | 1: 200 | / | 5 | 250 | 200 |
| Embodiment 5 | Sb-doped SnO₂-coated titanium dioxide | 1:3 | / | 1: 200 | / | 5 | 250 | 200 |
| Embodiment 6 | Sb-doped SnO₂-coated titanium dioxide | 1:9 | / | 1: 200 | / | 5 | 250 | 200 |
| Embodiment 7 | Sb-doped SnO₂-coated titanium dioxide | 1:3 | / | 1: 200 | / | 5 | 250 | 200 |
| Embodiment 8 | Sb-doped SnO₂-coated titanium dioxide | 1:9 | / | 1: 200 | / | 5 | 250 | 200 |
| Embodiment 9 | F-doped In₂O₃-coated Al₂O₃ | / | 1:3 | / | 1: 200 | 5 | 250 | 200 |
| Embodiment 10 | Sb-doped SnO₂-coated titanium dioxide | 1:3 | / | 1: 200 | / | 5 | 100 | 50 |
| Embodiment 11 | Sb-doped SnO₂-coated titanium dioxide | 1:3 | / | 1: 200 | / | 50 | 300 | 200 |
| Embodiment 12 | Sb-doped SnO₂-coated titanium dioxide | 1:3 | / | 1: 200 | / | 5 | 200 | 50 |
| Embodiment 13 | Sb-doped SnO₂-coated titanium dioxide | 1:3 | / | 1: 200 | / | 5 | 300 | 50 |
| Embodiment 14 | Sb-doped SnO₂-coated titanium dioxide | 1:3 | / | 1: 200 | / | 30 | 200 | 100 |
| Embodiment 15 | Sb-doped SnO₂-coated titanium dioxide | 1:9 | / | 1: 150 | / | 5 | 250 | 200 |
| Embodiment 16 | Sb-doped SnO₂-coated titanium dioxide | 1:9 | / | 1: 130 | / | 5 | 250 | 200 |
| Embodiment 17 | Sb-doped SnO₂-coated titanium dioxide | 1:9 | / | 1: 100 | / | 5 | 250 | 200 |
| Embodiment 18 | Sb-doped SnO₂-coated titanium dioxide | 1:9 | / | 1: 70 | / | 5 | 250 | 200 |
| Embodiment 19 | Sb-doped SnO₂-coated titanium dioxide | 1:9 | / | 1:40 | / | 5 | 250 | 200 |
| Embodiment 20 | Sb-doped SnO₂-coated titanium dioxide | 1:9 | / | 1: 20 | / | 5 | 250 | 200 |
| Embodiment 21 | Sb-doped SnO₂-coated titanium dioxide | 1:9 | / | 1: 10 | / | 5 | 250 | 200 |
| Embodiment 22 | Sb-doped SnO₂-coated titanium dioxide | 1:5 | / | 1: 200 | / | 5 | 250 | 200 |
| Embodiment 23 | Sb-doped SnO₂-coated titanium dioxide | 1:7 | / | 1: 200 | / | 5 | 250 | 200 |
| Embodiment 24 | Sb-doped SnO₂-coated titanium dioxide | 1:9 | / | 1: 200 | / | 5 | 250 | 200 |
| Embodiment 25 | Sb-doped SnO₂-coated titanium dioxide | 1:3 | / | 1: 200 | / | 5 | 250 | 200 |
| Comparative Embodiment 1 | Sb-doped SnO₂-coated titanium dioxide | 1: 1 | / | 1: 20 | / | 5 | 250 | 200 |
| Comparative Embodiment 2 | Sb-doped SnO₂-coated titanium dioxide | 1: 10 | / | 1: 20 | / | 5 | 250 | 200 |
| Comparative Embodiment 3 | Sb-doped SnO₂-coated titanium dioxide | 1: 10 | / | 1: 220 | / | 5 | 250 | 200 |
| Comparative Embodiment 4 | Sb-doped SnO₂-coated titanium dioxide | 1: 10 | / | 1: 20 | / | 5 | 250 | 200 |
| Comparative Embodiment 5 | Sb-doped SnO₂-coated titanium dioxide | 1:3 | / | 1: 220 | / | 5 | 250 | 200 |
| Comparative Embodiment 6 | No positive electrode protection layer is disposed | | | | | | | |

**Table 1 (Continued)**

| | Mass percentage based on positive electrode protection layer | | | Performance metrics | | | | |
|---|---|---|---|---|---|---|---|---|
| | Conductive composite material (%) | Conductive carbon (%) | Type and mass percentage of binder (%) | Adhesion force (N/m) | Sheet resistance of primer coating (Ω) | Sheet resistance of positive electrode plate (Ω) | Nail penetration performance | Number of cycles when capacity fades to 80% |
| Embodiment 1 | 80 | 10 | Lithium polyacrylate, 10% | 600 | 0.2 | 1.2 | 5/5p | 690 |
| Embodiment 2 | 95 | / | Lithium polyacrylate, 5% | 400 | 0.5 | 2 | 5/5p | 680 |
| Embodiment 3 | 85 | / | Lithium polyacrylate, 15% | >800 | 4.2 | 7.8 | 5/5p | 650 |
| Embodiment 4 | 90 | 9.50 | Lithium polyacrylate, 0.5% | 220 | 1.2 | 3.2 | 5/5p | 650 |
| Embodiment 5 | 80 | 10 | Sodium polyacrylate, 10% | 600 | 0.7 | 1.8 | 5/5p | 705 |
| Embodiment 6 | 95 | / | Sodium polyacrylate, 5% | 400 | 1.3 | 3.4 | 5/5p | 695 |
| Embodiment 7 | 85 | / | Sodium polyacrylate, 15% | >800 | 4.8 | 9.6 | 5/5p | 670 |
| Embodiment 8 | 90 | 9.50 | Sodium polyacrylate, 0.5% | 220 | 1.6 | 3.8 | 5/5p | 678 |
| Embodiment 9 | 85 | / | Lithium polyacrylate, 15% | >800 | 4 | 7.5 | 5/5p | 655 |
| Embodiment 10 | 85 | / | Lithium polyacrylate, 15% | >800 | 3.8 | 7.1 | 5/5p | 660 |
| Embodiment 11 | 85 | / | Lithium polyacrylate, 15% | >800 | 4.5 | 7.9 | 5/5p | 645 |
| Embodiment 12 | 85 | / | Lithium polyacrylate, 15% | >800 | 4 | 7.3 | 5/5p | 650 |
| Embodiment 13 | 85 | / | Lithium polyacrylate, 15% | >800 | 4.1 | 7.4 | 5/5p | 650 |
| Embodiment 14 | 85 | / | Lithium polyacrylate, 15% | >800 | 4.05 | 7.3 | 5/5p | 648 |
| Embodiment 15 | 90 | 9.50 | Lithium polyacrylate, 0.5% | 220 | 1.5 | 3.7 | 5/5p | 700 |
| Embodiment 16 | 90 | 9.50 | Lithium polyacrylate, 0.5% | 220 | 1.4 | 3.5 | 5/5p | 708 |
| Embodiment 17 | 90 | 9.50 | Lithium polyacrylate, 0.5% | 220 | 1.3 | 3.0 | 5/5p | 711 |
| Embodiment 18 | 90 | 9.50 | Lithium polyacrylate, 0.5% | 220 | 1.2 | 2.8 | 5/5p | 713 |
| Embodiment 19 | 90 | 9.50 | Lithium polyacrylate, 0.5% | 220 | 1.1 | 2.5 | 5/5p | 720 |
| Embodiment 20 | 90 | 9.50 | Lithium polyacrylate, 0.5% | 220 | 0.9 | 2.1 | 5/5p | 725 |
| Embodiment 21 | 90 | 9.50 | Lithium polyacrylate, 0.5% | 220 | 0.8 | 1.7 | 4/5p | 765 |
| Embodiment 22 | 85 | / | Lithium polyacrylate, 15% | >800 | 0.7 | 1.6 | 4/5p | 680 |
| Embodiment 23 | 85 | / | Lithium polyacrylate, 15% | >800 | 0.9 | 1.8 | 4/5p | 678 |
| Embodiment 24 | 85 | / | Lithium polyacrylate, 15% | >800 | 1.1 | 2.1 | 4/5p | 675 |
| Embodiment 25 | 80 | / | Lithium polyacrylate, 20% | >800 | 1.2 | 4.6 | 5/5p | 513 |
| Comparative Embodiment 1 | 75 | 10 | Lithium polyacrylate, 15% | >800 | 0.12 | 0.45 | 2/5p | 710 |
| Comparative Embodiment 2 | 80 | 15 | Lithium polyacrylate, 5% | 400 | 0.08 | 0.53 | 1/Sp | 715 |
| Comparative Embodiment 3 | 80 | / | Lithium polyacrylate, 20% | >800 | 1.3 | 5.3 | 5/5p | 400 |
| Comparative Embodiment 4 | 95 | / | PVDF, 5% | 190 | 10.8 | 21 | 1/Sp | 480 |
| Comparative Embodiment 5 | 80 | / | Lithium polyacrylate, 20% | >800 | 1.3 | 5.3 | 5/5p | 500 |
| Comparative Embodiment 6 | No positive electrode protection layer is disposed | | | 40 | / | 23 | 0/5p | 620 |

### Data analysis

No positive electrode protection layer is provided in Comparative Embodiment 6. As can be seen from Embodiments 1 to 25 versus Comparative Embodiments 1 to 6, the positive electrode protection layer improves the safety and electrochemical performance of the battery.

As can be seen from Embodiments 1 to 4, Embodiments 9, 15 to 21, and 22 to 24 versus Comparative Embodiments 1 to 3, the mass ratio of the doping element to the first metal element in the conductive oxide as well as the mass ratio of the first metal element in the conductive oxide to the metal element in the inorganic particles are controlled within the preferred range specified herein, thereby improving the electrochemical performance and safety of the battery.

As can be seen from Embodiments 1 to 25 versus Comparative Embodiments 4 to 5, in contrast to a non-water-soluble polymer binder, the water-soluble polymer metal salt used as a binder can further improve the electrochemical performance of the battery. Controlling the mass percentage of the water-soluble polymer metal salt within the preferred range specified herein can further improve the electrochemical performance of the battery.

As can be seen from Embodiment 3 versus Embodiments 10 to 14, controlling the particle diameters of the conductive composite, the first conductive material, and the inorganic particles within the preferred ranges specified herein can further reduce the internal resistance while ensuring battery safety, and improve the high-temperature cycle performance of the battery.

Comparison of Embodiments 1, 3, 4, and 25 shows that controlling the mass percentage of the binder within the preferred range specified herein can improve the high-temperature cycle performance of the battery.

It is hereby noted that the terms such as "first" and "second" in the specification and claims of this application are intended to distinguish between similar items, but not to indicate a specific order or sequence. Understandably, such terms may be interchangeable as appropriate, so that the embodiments of this application described herein can be implemented in the order or sequence other than what is described herein.

What is described above is merely exemplary embodiments of this application, but is not intended to limit this application. To a person skilled in the art, various modifications and variations may be made to this application. Any and all modifications, equivalent replacements, improvements, and the like made without departing from the essence and principles of this application still fall within the protection scope of this application.

## Claims

1. A positive electrode plate, comprising: a positive current collector, and a positive electrode protection layer and a positive active material layer disposed on the positive current collector in sequence; **characterized in that**, the positive electrode protection layer comprises inorganic particles, a first conductive material, and a binder; the binder comprises a water-soluble polymer metal salt; and the first conductive material comprises
a conductive oxide containing a doping element, **characterized in that**, a first metal element in the conductive oxide comprises at least one of a Group IVA metal element or a Group IIIA metal element; and the doping element comprises at least one of a Group IIIA non-metal element, a Group VA element, or a Group VIIA element; and
in the conductive oxide containing the doping element, a mass ratio of the doping element to the first metal element is 1: (10 to 200), and a mass ratio of the first metal element to a metal element in the inorganic particles is 1: (3 to 9).

2. The positive electrode plate according to claim 1, **characterized in that**, based on a total mass of the positive electrode protection layer, a mass percentage of the water-soluble polymer metal salt is 0.5% to 15%.

3. The positive electrode plate according to claim 1 or 2, **characterized in that**, a second metal element forming the water-soluble polymer metal salt comprises at least one of a Group IA metal element or a Group IIA metal element; and
a water-soluble polymer forming the water-soluble polymer metal salt comprises at least one of polyacrylic acid, carboxymethyl cellulose, polyacrylonitrile, or styrene butadiene; and/or
the water-soluble polymer metal salt comprises at least one of a water-soluble polymer sodium salt or a water-soluble polymer lithium salt.

4. The positive electrode plate according to any one of claims 1 to 3, **characterized in that**, in the conductive oxide containing the doping element, a mass ratio of the doping element to the first metal element is 1: (20 to 150), and a mass ratio of the first metal element to a metal element in the inorganic particles is 1: (5 to 9).

5. The positive electrode plate according to any one of claims 1 to 4, **characterized in that**, the first metal element comprises at least one of Sn or In, and the doping element comprises at least one of Sb, F, or B; and/or
the inorganic particles comprise at least one of ceramic, boehmite, aluminum oxide, titanium dioxide, magnesium oxide, zirconium oxide, or zinc oxide.

6. The positive electrode plate according to any one of claims 1 to 5, **characterized in that**, the positive electrode protection layer comprises a conductive composite, and the conductive composite comprises the inorganic particles and the first conductive material coating a surface of the inorganic particles.

7. The positive electrode plate according to claim 6, **characterized in that**, the conductive composite comprises: Sb-doped SnO₂-coated titanium dioxide, and, in the Sb-doped SnO₂-coated titanium dioxide, a mass ratio of Sb to Sn is 1: (100 to 200), and a mass ratio of Sn to Ti is 1: (3 to 9); and/or
the conductive composite comprises: F-doped InO₂-coated aluminum oxide, and, in the F-doped InO₂-coated aluminum oxide; a mass ratio of F to In is 1: (100 to 200), and a mass ratio of In to Al is 1: (3 to 9).

8. The positive electrode plate according to claim 6 or 7, **characterized in that**, based on a total mass of the positive electrode protection layer, a mass percentage of the conductive composite is 80% to 95%.

9. The positive electrode plate according to any one of claims 6 to 8, **characterized in that**, a particle diameter of the conductive composite is 100 nm to 300 nm, and a particle diameter of the inorganic particles is 50 nm to 200 nm; and/or
a particle diameter of the conductive oxide containing the doping element is 5 nm to 50 nm.

10. The positive electrode plate according to any one of claims 6 to 9, **characterized in that**, based on a total mass of the conductive composite, a mass percentage of the conductive oxide containing the doping element is 10% to 25%.

11. The positive electrode plate according to any one of claims 1 to 10, **characterized in that**, the positive electrode protection layer further comprises a second conductive material, and, based on a total mass of the positive electrode protection layer, a mass percentage of the second conductive material is greater than 0 and less than or equal to 10 wt%; and/or
the second conductive material comprises at least one of conductive carbon black, carbon nanotubes, Ketjen black, conductive graphite, or vapor grown carbon fibers.

12. The positive electrode plate according to any one of claims 1 to 11, **characterized in that**, a thickness of the positive electrode protection layer is 0.5 µm to 5 µm.

13. The positive electrode plate according to any one of claims 1 to 12, **characterized in that**, a resistance of the positive electrode protection layer is 0.1 S2 to 5 S2.

14. A secondary battery, **characterized in that**, the secondary battery comprises the positive electrode plate according to any one of claims 1 to 13.

15. An electronic device, **characterized in that**, the electronic device comprises the secondary battery according to claim 14.
